# EUROPEAN PATENT SPECIFICATION

(11) **EP 3 388 457 B1**
(45) Date of publication and mention of the grant of the patent: **15.01.2020**
(21) Application number: 17166572.2
(22) Date of filing: 13.04.2017
(51) Int. Cl.: C09J 151/00, C09J 7/38, C09J 4/06, C09J 133/06

(54) **PRESSURE-SENSITIVE ADHESIVE COMPOSITIONS**
DRUCKEMPFINDLICHE HAFTMITTELZUSAMMENSETZUNGEN
COMPOSITIONS D'ADHÉSIFS SENSIBLES À LA PRESSION

(43) Date of publication of application: 17.10.2018
(73) Proprietor: 3M Innovative Properties Company, Saint Paul, MN 55133-3427 (US)
(72) Inventor: Unverhau, Ms. Kerstin, 41453 Neuss (DE); Torre, Ms. Claudia, 41453 Neuss (DE); D Haese, Mr. François, B-2070 Zwijndrecht (BE); Moonen, Mr. Eric, B-2070 Zwijndrecht (BE); Bogaert, Mr. Yvan, B-2070 Zwijndrecht (BE); Kuesters, Mr. Christoph, 41453 Neuss (DE)
(74) Representative: Gabriel, Kiroubagaranne

(56) References cited:
- EP-A1- 0 913 443
- EP-A1- 2 803 712
- EP-A2- 0 574 803

## Description

### Technical Field

The present disclosure relates generally to the field of adhesives, more specifically to the field of pressure sensitive adhesive (PSA) compositions and assemblies. The present disclosure also relates to a method of manufacturing such pressure sensitive adhesive compositions and assemblies, and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives. Pressure sensitive adhesives (PSAs) are well known to one of ordinary skill in the art to possess certain properties including the following: (1) aggressive and permanent tack, (2) adherence with no more than finger pressure, (3) sufficient ability to hold onto an adhered, and (4) sufficient cohesive strength. As applications for pressure-sensitive adhesives have increased substantially in recent years, performance requirements have become increasingly demanding.

Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are various (meth)acrylate based copolymers, natural rubber, synthetic rubbers, and silicones.

The pressure sensitive adhesive materials known from the prior art do not often provide sufficient tack to various types of substrate, including the so-called LSE, MSE and HSE substrates, i.e. substrates having respectively a low surface energy, a medium surface energy and a high surface energy. In particular, the peel force or shear resistance on these challenging-to-bond substrates, particularly the LSE and MSE substrates, do not often fulfill the requirements, especially under environmental stress like altering temperatures and humidity.

This deficiency may partly be overcome by the addition of higher amounts of tackifiers. However, the excessive use of tackifiers may often detrimentally affect critical characteristics of pressure sensitive adhesives such as e.g. shear resistance and cohesive strength, and may raise the glass transition temperature of the corresponding adhesive. Furthermore, tackifiers may migrate into the substrate to which the adhesive tape is bonded and may lead to an undesired color change or stability reduction. One partial solution is disclosed in EP-A1-2803711 (Heimink et al.). EP-A1-2803712 discloses a multilayer pressure sensitive adhesive assembly comprising a pressure sensitive adhesive composition in the form of a first pressure sensitive adhesive polymeric foam layer and which further comprises a second pressure sensitive adhesive layer adjacent to the first pressure sensitive adhesive polymeric layer.

Without contesting the technical advantages associated with the pressure sensitive adhesive compositions known in the art, there is still a need for a stable and cost-effective pressure sensitive adhesive composition having improved and versatile adhesion characteristics, in particular with respect to peel forces and shear resistance on various types of difficult to adhere surfaces, such as in particular LSE and MSE substrates.

Other advantages of the pressure sensitive adhesive (PSA) compositions and assemblies of the invention will be apparent from the following description.

### Summary

According to one aspect, the present disclosure relates to a pressure sensitive adhesive polymeric foam composition, comprising:
a) a first (meth)acrylate copolymer comprising from 0.1 to 12 wt% of (meth)acrylic acid monomer units, based on the weight of the first (meth)acrylate copolymer; and
b) a second (meth)acrylate copolymer comprising from 15 to 40 wt% of (meth)acrylic acid monomer units, based on the weight of the second (meth)acrylate copolymer.

According to another aspect, the present disclosure is directed to a multilayer pressure sensitive adhesive assembly comprising a pressure sensitive adhesive composition as described above in the form of a first pressure sensitive adhesive polymeric foam layer, and which further comprises a second pressure sensitive adhesive layer adjacent to the first pressure sensitive adhesive polymeric layer.

In another aspect, the present disclosure is directed to a method of manufacturing a pressure sensitive adhesive composition as described above, wherein the method comprises the steps of:
a) providing the second (meth)acrylate copolymer comprising from 15 to 40 wt% of (meth)acrylic acid monomer units, based on the weight of the second (meth)acrylate copolymer; and
b) incorporating the second (meth)acrylate copolymer into a curable precursor composition comprising the main monomer units used to prepare the first (meth)acrylate copolymer, (meth)acrylic acid monomer units, a polymerization initiator, optionally a crosslinker, and optionally a particulate filler material, thereby forming a curable precursor composition of the pressure sensitive composition; and
c) curing the curable precursor composition of the pressure sensitive composition obtained in step b), preferably with actinic radiation.

According to still another aspect, the present disclosure relates to the use of a pressure sensitive adhesive composition or a pressure sensitive adhesive assembly as described above for the bonding to a low surface energy substrate, a medium surface energy substrate and/or a high surface energy substrate.

### Detailed description

According to a first aspect, the present disclosure relates to a pressure sensitive adhesive polymeric foam composition, comprising:
a) a first (meth)acrylate copolymer comprising from 0.1 to 12 wt% of (meth)acrylic acid monomer units, based on the weight of the first (meth)acrylate copolymer; and
b) a second (meth)acrylate copolymer comprising from 15 to 40 wt% of (meth)acrylic acid monomer units, based on the weight of the second (meth)acrylate copolymer.

It has surprisingly been found that a pressure sensitive adhesive polymeric foam composition comprising a combination of a first (meth)acrylate copolymer and a second (meth)acrylate copolymer as described above combines high peel forces with high shear force resistance on various types of substrates. In particular, such advantageous properties may be obtained on substrates as diverse as low surface energy, medium surface energy and/or high surface energy substrates. This is particularly surprising finding as these various substrates typically exhibit completely different surface chemistry and energy.

The pressure sensitive adhesive polymeric foam composition of the present disclosure also provides excellent mechanical properties (in particular high stress relaxation, high internal strength and good conformability) besides the outstanding adhesion performance on various types of substrates, including the challenging-to-bond LSE and MSE substrates.

Without wishing to be bound by theory, it is believed that this very unique combination of advantageous properties is due to the specific combination of a first (meth)acrylate copolymer and a second (meth)acrylate copolymer as described above within the same pressure sensitive adhesive composition. The first (meth)acrylate copolymer comprising from 0.1 to 12 wt% of (meth)acrylic acid monomer units is believed to provide the excellent adhesion performance on various types of substrates, due in particular to the excellent wetting properties provided by the relatively low concentration of (meth)acrylic acid monomer units present in the first (meth)acrylate copolymer and which provides excellent softness to the resulting pressure sensitive adhesive composition. As for the second (meth)acrylate copolymer comprising from 15 to 40 wt% of (meth)acrylic acid monomer units, the latter is believed to provide the outstanding mechanical properties, due in particular to the relatively high concentration of (meth)acrylic acid monomer units present in the first (meth)acrylate copolymer. In other words, the pressure sensitive adhesive compositions of the present disclosure surprisingly combine the inherently contradicting properties provided by a relatively low concentration of (meth)acrylic acid monomer units and relatively high concentration of (meth)acrylic acid monomer units within the same (meth)acrylic-based pressure sensitive adhesive composition. Still without wishing to be bound by theory, it is believed that these two set of contradicting properties are both delivered thanks to the coexistence of the first and second (meth)acrylate copolymer as a multi-phase system into the same pressure sensitive adhesive composition, and which provides advantageous properties when compared to compositions having a homogenous structure.

The pressure sensitive adhesive composition of the present disclosure may advantageously form part of a multilayer pressure sensitive adhesive assembly, wherein the pressure sensitive adhesive composition is in the form of a first pressure sensitive adhesive polymeric foam layer, and wherein the multilayer assembly further comprises a second pressure sensitive adhesive layer adjacent to the first pressure sensitive adhesive polymeric layer. It has indeed been surprisingly found that the pressure sensitive adhesive compositions of the present disclosure, albeit comprising a relatively high overall (meth)acrylic acid concentration, do not lead to (or substantially reduce) the potentially issue of (meth)acrylic acid monomers diffusion to the adjacent layer(s). This unwanted diffusion phenomenon may in particular occur in those multilayer assemblies comprising a layer having a relatively high concentration of (meth)acrylic acid monomer units adjacent to a layer having a relatively low concentration of acrylic acid monomer units, and - due to a concentration gradient of (meth)acrylic acid monomer units in the multilayer assembly - translates into a (meth)acrylic acid monomers diffusion from the high (meth)acrylic acid concentrated layer into the low (meth)acrylic acid concentrated layer. Without wishing to be bound by theory, it is believed that this unique property is due to the coexistence of the first and second (meth)acrylate copolymer as a multi-phase system into the same pressure sensitive adhesive composition, which prevents or at least substantially reduces the diffusion of free (meth)acrylic monomer units between layers.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

In the context of the present disclosure, the expression "high surface energy substrates" is meant to refer to those substrates having a surface energy of more than 350 dynes per centimeter, typically more than 400 dynes per centimeter, and more typically to those substrates having a surface energy comprised between 400 and 1100 dynes per centimeter. Included among such materials are metal substrates (e.g. aluminum, stainless steel), and glass.

The surface energy is typically determined from contact angle measurements as described, for example, in ASTM D7490-08.

The term superimposed, as used throughout the description, means that two or more layers of the liquid precursors of the polymers or of the polymer layers of the multilayer pressure sensitive adhesive assembly, are arranged on top of each other. Superimposed liquid precursor layers or polymer layers may be arranged directly next to each other so that the upper surface of the lower layer is abutting the lower surface of the upper layer.

The term adjacent, as used throughout the description, refers to two superimposed layers within the precursor multilayer pressure sensitive adhesive assembly or the cured multilayer pressure sensitive adhesive assembly which are arranged directly next to each other, i.e. which are abutting each other.

The terms "glass transition temperature" and "Tg" are used interchangeably and refer to the glass transition temperature of a (co)polymeric material or a mixture. Unless otherwise indicated, glass transition temperature values are determined by Dynamic Mechanical Thermal Analysis (DMTA).

Exemplary "wet-in-wet" production processes for use herein are described in details in e.g. WO-A1-2011094385 (Hitschmann et al.) or in EP-A1-0259094 (Zimmerman et al.).

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl and 2-propylheptyl.

According to a typical aspect of the pressure sensitive adhesive composition of the present disclosure, the first (meth)acrylate copolymer and/or the second (meth)acrylate copolymer, preferably the first (meth)acrylate copolymer and the second (meth)acrylate copolymer, comprise linear or branched C₁-C₃₂ (meth)acrylic acid ester monomer units, C₁-C₂₄ (meth)acrylic acid ester monomer units, or even C₁-C₁₈ (meth)acrylic acid ester monomer units, as main monomers units.

According to another typical aspect of the pressure sensitive adhesive composition of the present disclosure, the first (meth)acrylate copolymer and/or the second (meth)acrylate copolymer, preferably the first (meth)acrylate copolymer and the second (meth)acrylate copolymer, comprise, as main monomer units, linear or branched alkyl (meth)acrylate ester monomer units selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, 2-propylheptyl (meth)acrylate, stearyl (meth)acrylate, isobornyl (meth)acrylate, benzyl (meth)acrylate, nonyl (meth)acrylate, isophoryl (meth)acrylate, and any combinations or mixtures thereof.

In an exemplary aspect, the first (meth)acrylate copolymer and/or the second (meth)acrylate copolymer, preferably the first (meth)acrylate copolymer and the second (meth)acrylate copolymer, comprise, as main monomer units, linear or branched alkyl (meth)acrylate ester monomer units selected from the group consisting of 2-ethylhexyl (meth)acrylate, 2-propylheptyl (meth)acrylate, iso-octyl (meth)acrylate, and any combinations or mixtures thereof.

In still another exemplary aspect, the first (meth)acrylate copolymer and/or the second (meth)acrylate copolymer, preferably the first (meth)acrylate copolymer and the second (meth)acrylate copolymer, comprise 2-ethylhexyl (meth)acrylate monomers, as main monomer units.

According to an advantageous aspect of the pressure sensitive adhesive composition of the present disclosure, the second (meth)acrylate copolymer for use herein comprises (meth)acrylic acid monomer units in an amount greater than 15 wt%, greater than 16 wt%, or even greater than 17 wt%, based on the weight of the first (meth)acrylate copolymer.

In a preferred aspect of the pressure sensitive adhesive composition of the present disclosure, the first (meth)acrylate copolymer for use herein comprises from 0.1 to 11 wt%, from 0.1 to 10 wt%, from 0.2 to 10 wt%, from 0.2 to 9 wt%, from 0.2 to 8 wt%, from 0.3 to 8 wt%, from 0.5 to 8 wt%, from 0.5 to 6 wt%, from 1 to 6 wt%, or even from 1 to 5 wt%, of (meth)acrylic acid monomer units, based on the weight of the first (meth)acrylate copolymer.

Preferably still, the second (meth)acrylate copolymer for use herein comprises from 16 to 40 wt%, from 16 to 35 wt%, from 16 to 30 wt%, from 16 to 25 wt%, from 17 to 25 wt%, from 17 to 23 wt%, or even from 17 to 20 wt% of (meth)acrylic acid monomer units, based on the weight of the second (meth)acrylate copolymer.

In a typical aspect of the pressure sensitive adhesive composition of the present disclosure, the first (meth)acrylate copolymer for use herein has a Tg no greater than 0°C. Typically still, the second (meth)acrylate copolymer for use herein has a Tg greater than 0°C.

According to a preferred aspect of the pressure sensitive adhesive composition of the present disclosure, the first (meth)acrylate copolymer for use herein has Tg comprised between -70°C and 0°C, between -70°C and -10°C, -60°C and -10°C, between -60°C and - 20°C, between -60°C and -30°C, between -55°C and -35°C, or even between -50°C and - 40°C.

Preferably still, the second (meth)acrylate copolymer has Tg comprised between 2°C and 100°C, between 2°C and 80°C, between 2°C and 60°C, between 2°C and 50°C, between 2°C and 45°C, between 5°C and 45°C, between 5°C and 40°C, between 5°C and 35°C, or even between 10°C and 30°C.

In an advantageous aspect of the pressure sensitive adhesive composition according to the present disclosure, the second (meth)acrylate copolymer for use herein has a Tg no greater than 100°C, no greater than 80°C, no greater than 60°C, no greater than 50°C, no greater than 45°C, or even no greater than 40°C.

According to a beneficial aspect, the pressure sensitive adhesive composition of the present disclosure comprises from 65 to 99 wt%, from 70 to 95 wt%, from 75 to 95 wt%, from 75 to 90 wt%, or even from75 to 85 wt%, of the first (meth)acrylate copolymer, and wherein the weight percentages are based on the total weight of the pressure sensitive adhesive composition.

Beneficially still, the pressure sensitive adhesive composition of the present disclosure comprises from 1 to 35 wt%, from 1 to 30 wt%, from 2 to 25 wt%, from 3 to 25 wt%, from 3 to 20 wt%, from 4 to 20 wt%, or even from 4 to 15 wt%, of the second (meth)acrylate copolymer, and wherein the weight percentages are based on the total weight of the pressure sensitive adhesive composition.

According to a preferred aspect of the present disclosure, the first (meth)acrylate copolymer for use herein comprises:
a) from 0.1 to 11 wt%, from 0.1 to 10 wt%, from 0.2 to 10 wt%, from 0.2 to 9 wt%, from 0.2 to 8 wt%, from 0.3 to 8 wt%, from 0.5 to 8 wt%, from 0.5 to 6 wt%, from 1 to 6 wt%, or even from 1 to 5 wt%, of (meth)acrylic acid monomer units, based on the weight of the first (meth)acrylate copolymer; and
b) from 89 to 99.9 wt%, from 90 to 99.9 wt%, from 90 to 99.8 wt%, from 91 to 99.8 wt%, from 92 to 99.8 wt%, from 92 to 99.7 wt%, from 92 to 99.5 wt%, from 94 to 99.5 wt%, from 94 to 99 wt%, or even from 95 to 99 wt%, of linear or branched C₁-C₃₂ (meth)acrylic acid ester monomer units, C₁-C₂₄ (meth)acrylic acid ester monomer units, or even C₁-C₁₈ (meth)acrylic acid ester monomer units, based on the weight of the first (meth)acrylate copolymer.

According to another preferred aspect of the present disclosure, the second (meth)acrylate copolymer for use herein comprises:
a) comprises from 13 to 35 wt%, from 13 to 30 wt%, from 15 to 30 wt%, from 15 to 25 wt%, or even from 17 to 23 wt%, of (meth)acrylic acid monomer units, based on the weight of the second (meth)acrylate copolymer; and
b) from 65 to 87 wt%, from 70 to 87 wt%, from 70 to 85 wt%, from 75 to 85 wt%, or even from 77 to 83 wt%, of linear or branched C₁-C₃₂ (meth)acrylic acid ester monomer units, C₁-C₂₄ (meth)acrylic acid ester monomer units, or even C₁-C₁₈ (meth)acrylic acid ester monomer units, based on the weight of the second (meth)acrylate copolymer.

The first (meth)acrylate copolymer for use herein may be prepared by any conventional free radical polymerization method, including solution, radiation, bulk, dispersion, emulsion, solventless, and suspension processes. The resulting copolymers may be random or block copolymers. In a preferred aspect, the low Tg (meth)acrylate copolymer component is generally prepared as either a solution or syrup copolymer composition.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 24 hours, depending upon the batch size and temperature. Examples of the solvent are methanol, tetrahydrofuran, ethanol, isopropanol, tert-butanol, acetone, methyl ethyl ketone, methyl acetate, ethyl acetate, toluene, xylene, and an ethylene glycol alkyl ether. Those solvents can be used alone or as mixtures thereof.

A syrup polymer technique comprises partially polymerizing monomers to produce a syrup polymer comprising the first (meth)acrylate copolymer and unpolymerized monomers. The syrup polymer composition is polymerized to a useful coating viscosity, which may be coated onto a substrate (such as a tape backing) and further polymerized.

The polymerizations may be conducted in the presence of, or preferably in the absence of, suitable solvents such as ethyl acetate, toluene and tetrahydrofuran which are unreactive with the functional groups of the components of the syrup polymer.

A preferred method of preparation of the coatable syrup polymer is photoinitiated free radical polymerization. Advantages of the photopolymerization method are that 1) heating the monomer solution is unnecessary and 2) photoinitiation is stopped completely when the activating light source is turned off. Polymerization to achieve a coatable viscosity may be conducted such that the conversion of monomers to polymer is up to about 10%. Polymerization can be terminated when the desired conversion and viscosity have been achieved by removing the light source and by bubbling air (oxygen) into the solution to quench propagating free radicals.

Polymerization can be accomplished by exposing the syrup polymer composition to energy in the presence of a photoinitiator. Energy activated initiators may be unnecessary where, for example, ionizing radiation is used to initiate polymerization.

Useful photoinitiators include benzoin ethers such as benzoin methyl ether and benzoin isopropyl ether; substituted acetophenones such as 2, 2-dimethoxyacetophenone, available as Irgacure™ 651 photoinitiator (BASF, Ludwigshafen, Germany), 2,2 dimethoxy-2-phenyl-1-phenylethanone, available as Esacure™ KB-1 photoinitiator (Sartomer Co.; West Chester, PA), and dimethoxyhydroxyacetophenone; substituted α-ketols such as 2- methyl-2-hydroxy propiophenone; aromatic sulfonyl chlorides such as 2-naphthalene-sulfonyl chloride; and photoactive oximes such as 1-phenyl-1,2-propanedione-2-(O-ethoxy-carbonyl)oxime. Particularly preferred among these are the substituted acetophenones.

Preferred photoinitiators are photoactive compounds that undergo a Norrish I cleavage to generate free radicals that can initiate by addition to the acrylic double bonds. Additional photoinitiator can be added to the mixture to be coated after the copolymer has been formed, i.e., photoinitiator can be added to the syrup polymer mixture.

The degree of conversion (of monomers to copolymer) can be monitored during the irradiation by measuring the index of refraction of the polymerizing mixture.

The second (meth)acrylate copolymer for use herein may be prepared by any conventional free radical polymerization method, including solution, radiation, bulk, dispersion, emulsion, and suspension processes. The resulting adhesive copolymers may be random or block copolymers.

The second (meth)acrylate copolymer for use herein can be polymerized by techniques including, but not limited to, the conventional techniques of solvent polymerization, dispersion polymerization, and solventless bulk polymerization. The monomer mixture may comprise a polymerization initiator, especially a thermal initiator or a photoinitiator of a type and in an amount effective to polymerize the comonomers.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 20 hours, depending upon the batch size and temperature. Examples of the solvent are methanol, tetrahydrofuran, ethanol, isopropanol, tert-butanol, acetone, methyl ethyl ketone, methyl acetate, ethyl acetate, toluene, xylene, and an ethylene glycol alkyl ether. Those solvents can be used alone or as mixtures thereof.

In a typical photopolymerization method, a monomer mixture may be irradiated with ultraviolet (UV) rays in the presence of a photopolymerization initiator (i.e., photoinitiators). Exemplary photoinitiators are those available under the trade designations IRGACURE™ and DAROCUR™ from BASF and include 1-hydroxy cyclohexyl phenyl ketone (IRGACURE™ 184), 2,2-dimethoxy-1,2-diphenylethan-1-one (IRGACURE 651), *bis*(2,4,6-trimethylbenzoyl)phenylphosphineoxide (IRGACURE™ 819), 1-[4-(2-hydroxyethoxy)phenyl]-2-hydroxy-2-methyl-1-propane-1-one (IRGACURE™ 2959), 2-benzyl-2-dimethylamino-1-(4-morpholinophenyl)butanone (IRGACURE™ 369), 2-methyl-1-[4-(methylthio)phenyl]-2-morpholinopropan-1-one (IRGACURE™ 907), and 2-hydroxy-2-methyl-1-phenyl propan-1-one (DAROCUR™ 1173). Preferred photoinitiators are IRGACURE™ 819, 651, 184 and 2959.

In a typical thermal polymerization method, a monomer mixture may be subjected to thermal energy in the presence of a thermal polymerization initiator (i.e., thermal initiators). Exemplary thermal initiators are those available under the trade designations VAZO™ from DuPont.

Solventless polymerization methods, such as the continuous free radical polymerization method described in U.S. Pat. Nos. 4,619,979 and 4,843,134 (Kotnour et al.); the essentially adiabatic polymerization methods using a batch reactor described in U.S. Pat. No. 5,637,646 (Ellis); and, the methods described for polymerizing packaged pre-adhesive compositions described in U.S. Pat. No. 5,804,610 (Hamer et al.) may also be utilized to prepare the second (meth)acrylate copolymer.

In a preferred aspect, the second (meth)acrylate copolymer for use herein is prepared using an essentially solventless free-radical polymerization method, in particular an essentially solventless thermal free-radical polymerization method.

According to an advantageous aspect, the second (meth)acrylate copolymer for use herein is prepared by an essentially adiabatic polymerization method.

The degree of conversion (of monomers to copolymer) can be monitored during the irradiation by measuring the index of refraction of the polymerizing mixture.

According to an advantageous aspect, the second (meth)acrylate copolymer of step a) is obtained as a pre-polymer composition having a polymer conversion rate greater than 10%, greater than 15%, greater than 20%, greater than 25%, greater than 30%, greater than 35%, greater than 40%, or even greater than 45%.

According to another advantageous aspect, the second (meth)acrylate copolymer of step a) is obtained as a pre-polymer composition having a polymer conversion rate comprised between 10 and 60%, between 20 and 55%, between 30 and 50%, or even between 35 and 50%.

If desired, a chain transfer agent may be added to the monomer mixture of either of the first or the second (meth)acrylate copolymers to produce a copolymer having the desired molecular weight.

Examples of useful chain transfer agents include but are not limited to those selected from the group consisting of carbon tetrabromide, alcohols, mercaptans, and mixtures thereof. When present, the preferred chain transfer agents are isooctylthioglycolate and carbon tetrabromide.

In order to increase cohesive strength of the pressure-sensitive adhesive composition of the present disclosure, a crosslinking additive may be added to the adhesive composition comprising the combination of the first and the second (meth)acrylate copolymers. Two main types of crosslinking additives are exemplary. The first crosslinking additive is a thermal crosslinking additive such as multifunctional aziridine, isocyanate and epoxy. One example of aziridine crosslinker is 1,1' -isophthaloyl-bis(2-methylaziridine (CAS No. 7652-64-4). Such chemical crosslinkers can be added into PSAs after polymerization and activated by heat during oven drying of the coated adhesive. Although polyfunctional (meth)acrylates may be included in the copolymer component(s) and may function as crosslinking agents, additional crosslinking agents may be added. In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, and DE 10 2008 059 050 A. Suitable accelerant and retardant systems for use herein are described e.g. in the description of US-A1- 2011/0281964. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

In another aspect, chemical crosslinkers, which rely upon free radicals to carry out the crosslinking reaction, may be employed. Reagents such as, for example, peroxides serve as a source of free radicals. When heated sufficiently, these precursors will generate free radicals that bring about a crosslinking reaction of the polymer. A common free radical generating reagent is benzoyl peroxide. Free radical generators are required only in small quantities, but generally require higher temperatures to complete a crosslinking reaction than those required for the bisamide and isocyanate reagents.

The second type of crosslinking additive is a photosensitive crosslinker, which is activated by high intensity ultraviolet (UV) light. Two common photosensitive crosslinkers used for acrylic PSAs are benzophenone and copolymerizable aromatic ketone monomers as described in U.S. Patent No. 4,737,559 (Kellen et al.). Another photocrosslinker, which can be post-added to the solution or syrup copolymer and activated by UV light is a triazine, for example, 2,4-bis(trichloromethyl)-6-(4-methoxy-phenyl)-s-triazine. In some aspects, multifunctional acrylates may be used to increase the cohesive strength. Multi-functional acrylates are particularly useful for emulsion polymerization. Examples of useful multi-functional acrylate crosslinking agents include, but are not limited to, diacrylates, triacrylates, and tetraacrylates, such as 1,6-hexanediol diacrylate, poly(ethylene glycol) diacrylates, polybutadiene diacrylate, polyurethane diacrylates, and propoxylated glycerin triacrylate, and mixtures thereof.

The amount and identity of the crosslinking agent is tailored depending upon application of the adhesive composition. If present, a crosslinker can be used in any suitable amount. Typically, the crosslinking agent is present in amounts less than 5 parts based on total dry weight of adhesive composition.

In the context of the present disclosure, the pressure sensitive adhesive composition may comprise a crosslinking agent which is preferably selected from the group consisting of multifunctional aziridines, multifunctional isocyanates, multifunctional epoxides, benzophenone, triazines, multifunctional acrylates, multifunctional carboxylates, oxetanes, oxazolines, and any combinations or mixtures thereof. In a more preferred aspect, the crosslinking agent is selected from the group consisting of multifunctional acrylates.

The pressure sensitive adhesive composition may comprise, as optional ingredients, tackifying resins, in particular hydrogenated hydrocarbon tackifiers. Exemplary hydrogenated hydrocarbon tackifiers include C9 and C5 hydrogenated hydrocarbon tackifiers. Examples of C9 hydrogenated hydrocarbon tackifiers include those sold under the trade designation: "REGALITE S-5100", "REGALITE R-7100", "REGALITE R-9100", "REGALITE R-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1139", and "REGALREZ 3103", sold by Eastman Chemical Co., Middelburg, Netherlands; "PICCOTAC" and EASTOTAC" sold by Eastman Chemical Co.; "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL; and "ESCOREZ 5000 series" sold by Exxon Mobil Corp., Irving, TX. Of particular interest are partially hydrogenated C9 hydrogenated tackifiers, preferably fully hydrogenated C9 hydrogenated tackifiers.

Accordingly, and in one advantageous aspect, the pressure sensitive adhesive composition according to the present disclosure is substantially free of tackifying resins, in particular free of hydrocarbon tackifying resins.

Other additives can be added in order to enhance the performance of the first pressure sensitive adhesive polymer layer. For example, leveling agents, ultraviolet light absorbers, hindered amine light stabilizers (HALS), oxygen inhibitors, wetting agents, rheology modifiers, defoamers, biocides, flame retardants, dyes and the like, can be included herein. All of these additives and the use thereof are well known in the art. It is understood that any of these compounds can be used so long as they do not deleteriously affect the adhesive properties.

In some advantageous aspects, the pressure sensitive adhesive composition of the present disclosure comprises a filler material, in particular a particulate filler material. Preferably, the optional filler material for use herein is selected from the group of expandable microspheres, glass bubbles, and any combinations thereof.

According to a particularly preferred aspect of the present disclosure, the pressure sensitive adhesive composition comprises:
a) from 65 to 99 wt%, from 70 to 95 wt%, from 75 to 95 wt%, from 75 to 90 wt%, or even from 75 to 85 wt%, of the first (meth)acrylate copolymer;
b) from 1 to 35 wt%, from 1 to 30 wt%, from 2 to 25 wt%, from 3 to 25 wt%, from 3 to 20 wt%, from 4 to 20 wt%, or even from 4 to 15 wt%, of the second (meth)acrylate copolymer; and
c) optionally, from 2 wt% to 30 wt%, from 2 wt% to 20 wt%, or even from 2 wt% to 15 wt% of a filler material preferably selected from the group of expandable microspheres and glass bubbles;
wherein the weight percentages are based on the total weight of the pressure sensitive adhesive composition.

The pressure sensitive adhesive composition of the present disclosure may be prepared by simple blending of the first and the second (meth)acrylate copolymer components, optionally with the optional ingredients such as e.g. the filler material and the tackififying resin. The copolymers can be blended using several conventional methods, such as e.g. melt blending, solvent blending, or any suitable physical means.

Physical blending devices that provide dispersive mixing, distributive mixing, or a combination of dispersive and distributive mixing are useful in preparing homogenous blends. Both batch and continuous methods of physical blending can be used. Examples of batch methods include BRABENDER (using a BRABENDER PREP CENTER, available from C. W. Brabender Instruments, Inc.; South Hackensack, N.J.) or BANBURY internal mixing and roll milling (using equipment available from FARREL COMPANY; Ansonia, Conn.). Examples of continuous methods include single screw extruding, twin screw extruding, disk extruding, reciprocating single screw extruding, and pin barrel single screw extruding. The continuous methods can include utilizing both distributive elements, such as cavity transfer elements (e.g., CTM, available from RAPRA Technology, Ltd.; Shrewsbury, England) and pin mixing elements, static mixing elements and dispersive elements (e.g., MADDOCK mixing elements or SAXTON mixing elements as described in "Mixing in Single-Screw Extruders," Mixing in Polymer Processing, edited by Chris Rauwendaal (Marcel Dekker Inc.: New York (1991), pp. 129, 176-177, and 185-186).

According to an alternative aspect, the pressure sensitive adhesive composition of the present disclosure may be prepared by incorporating the second (meth)acrylate copolymer into a curable precursor composition of the first (meth)acrylate copolymer comprising the main monomer units used to prepare the first (meth)acrylate copolymer, (meth)acrylic acid monomer units, optionally a polymerization initiator, optionally a crosslinker, and optionally a particulate filler material, thereby forming a curable precursor composition of the pressure sensitive composition. The first (meth)acrylate copolymer is therefore formed in a second step, and in-situ after suitable curing of the curable precursor composition of the pressure sensitive composition.

In a preferred aspect, the second (meth)acrylate copolymer is diluted into the curable precursor composition of the first (meth)acrylate copolymer and preferably mixed by shaking.

According to another aspect of the present disclosure, it is provided a method of manufacturing a pressure sensitive adhesive composition as described above, wherein the method comprises the steps of:
a) providing the second (meth)acrylate copolymer comprising from 15 to 40 wt% of (meth)acrylic acid monomer units, based on the weight of the second (meth)acrylate copolymer; and
b) incorporating the second (meth)acrylate copolymer into a curable precursor composition comprising the main monomer units used to prepare the first (meth)acrylate copolymer, (meth)acrylic acid monomer units, a polymerization initiator, optionally a crosslinker, and optionally a particulate filler material, thereby forming a curable precursor composition of the pressure sensitive composition; and
c) curing the curable precursor composition of the pressure sensitive composition obtained in step b), preferably with actinic radiation.

According to an advantageous aspect of the method of manufacturing a pressure sensitive adhesive composition, the second (meth)acrylate copolymer is obtained by free-radical polymerization, in particular by an essentially solventless polymerization method, more in particular by an essentially adiabatic polymerization reaction.

According to still another advantageous aspect of the method of manufacturing a pressure sensitive adhesive composition, the second (meth)acrylate copolymer is incorporated into the curable precursor composition of the first (meth)acrylate copolymer by dilution, optionally followed by a mixing step.

In still another beneficial aspect, the second (meth)acrylate copolymer of step a) is obtained as a pre-polymer composition having a polymer conversion rate greater than 10%, greater than 15%, greater than 20%, greater than 25%, greater than 30%, greater than 35%, greater than 40%, or even greater than 45%.

In yet another beneficial aspect, the second (meth)acrylate copolymer of step a) is obtained as a pre-polymer composition having a polymer conversion rate comprised between 10 and 60%, between 20 and 55%, between 30 and 50%, or even between 35 and 50%.

The pressure sensitive adhesive composition as described herein takes the form of a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume.

A polymeric foam layer for use herein has for example a thickness comprised between 100 and 6000 micrometers, between 200 and 4000 micrometers, between 500 and 2000 micrometers, or even between 800 and 1500 micrometers. As will be apparent to those skilled in the art, in the light of the present description, the preferred thickness of the polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated. Alternatively, the voids may result from the incorporation of hollow fillers, such as hollow polymeric particles, hollow glass microspheres or hollow ceramic microspheres.

In one aspect of the present disclosure, the pressure sensitive adhesive composition in the form of a polymeric foam layer is obtained by incorporation of hollow particulate filler material, in particular expandable microspheres, glass microspheres and glass bubbles.

In an advantageous aspect, the pressure sensitive adhesive composition in the form of a polymeric foam layer is obtained by frothing techniques, preferably by whipping a gas into the polymerizable pressure sensitive adhesive composition.

According to another advantageous aspect, the pressure sensitive adhesive composition in the form of a polymeric foam layer has a thickness comprised between 100 and 6000 micrometers, between 200 and 4000 micrometers, between 300 and 2000 micrometers, between 500 and 2000 micrometers, between 800 and 1500 micrometers, or even between 600 and 1300 micrometers.

According to another aspect, the present disclosure is directed to a multilayer pressure sensitive adhesive assembly comprising a pressure sensitive adhesive composition as described above in the form of a first pressure sensitive adhesive polymeric foam layer and which further comprises a second pressure sensitive adhesive layer adjacent to the first pressure sensitive adhesive polymeric layer.

Multilayer pressure sensitive adhesive assemblies of this type, and in particular dual layer polymeric foam tape assemblies, are particularly advantageous when compared to single-layer pressure sensitive adhesives, in that adhesion (quick adhesion) can be adjusted by the formulation of the second pressure sensitive adhesive layer (also commonly referred to as the skin layer), while other properties/requirements of the overall assembly such as application issues, deforming issues and energy distribution may be addressed by appropriate formulation of the polymeric foam layer (also commonly referred to as the core layer).

According to an advantageous aspect, the multilayer pressure sensitive adhesive assembly as described herein is in the form of a skin/core multilayer pressure sensitive adhesive assembly, wherein the first pressure sensitive adhesive polymeric foam layer is the core layer of the multilayer pressure sensitive adhesive assembly and the second pressure sensitive adhesive layer is the skin layer of the multilayer pressure sensitive adhesive assembly.

According to a further advantageous aspect, the multilayer pressure sensitive adhesive assembly as described herein is in the form of a multilayer pressure sensitive adhesive assembly further comprising a third pressure sensitive adhesive layer, thereby forming e.g. a three-layered multilayer pressure sensitive adhesive assembly. Preferably, the third pressure sensitive adhesive layer is adjacent to the first pressure sensitive adhesive polymeric foam layer in the side of the first pressure sensitive adhesive polymeric foam layer which is opposed to the side of the first pressure sensitive adhesive polymeric foam layer adjacent to the second pressure sensitive adhesive layer. Preferably still, the first pressure sensitive adhesive polymeric foam layer, the second pressure sensitive adhesive layer and the third pressure sensitive adhesive layer are superimposed.

In a beneficial aspect, the multilayer pressure sensitive adhesive assembly is in the form of a skin/core/skin multilayer pressure sensitive adhesive assembly, wherein the first pressure sensitive adhesive polymeric foam layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.

The second pressure sensitive adhesive layer and/or the third pressure sensitive adhesive layer may have any composition commonly known in the art. As such, the composition of these various layers for use in the multilayer pressure sensitive adhesive assemblies of the present disclosure is not particularly limited.

In a particular aspect, the second pressure sensitive adhesive layer and/or the third pressure sensitive adhesive layer comprise a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

In a typical aspect, the second pressure sensitive adhesive layer and/or the third pressure sensitive adhesive layer comprise a polymer base material selected from the group consisting of polyacrylates, polyurethanes, and any combinations, copolymers or mixtures thereof. According to another typical aspect, the second pressure sensitive adhesive layer and/or the third pressure sensitive adhesive layer comprise a polymer base material selected from the group consisting of polyacrylates, and any combinations, copolymers or mixtures thereof.

According to a preferred aspect of the pressure sensitive adhesive assemblies of the present disclosure, the second pressure sensitive adhesive layer and/or the third pressure sensitive adhesive layer comprise a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

According to a preferred aspect of the pressure sensitive adhesive assemblies of the present disclosure, the second pressure sensitive adhesive layer and/or the third pressure sensitive adhesive layer comprise a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, 2-propylheptyl (meth)acrylate, stearyl (meth)acrylate, isobornyl (meth)acrylate, benzyl (meth)acrylate, nonyl (meth)acrylate, isophoryl (meth)acrylate, and any combinations or mixtures thereof.

In a more preferred aspect, the linear or branched alkyl (meth)acrylate ester is selected from the group consisting of iso-octyl (meth)acrylate, 2-ethylhexyl (meth)acrylate, 2-propylheptyl (meth)acrylate, butyl acrylate, 2-octyl (meth)acrylate, and any combinations or mixtures thereof; more preferably from the group consisting of iso-octyl acrylate, 2-octyl (meth)acrylate, 2-ethylhexyl (meth)acrylate and 2-propylheptyl (meth)acrylate, and any combinations or mixtures thereof; even more preferably from the group consisting of 2-ethylhexyl acrylate, 2-octyl acrylate and 2-propylheptyl acrylate, and any combinations or mixtures thereof.

According to an alternative aspect of the multilayer pressure sensitive adhesive assembly of the present disclosure the second pressure sensitive adhesive layer and/or the third pressure sensitive adhesive layer have a (co)polymeric composition identical or similar to the composition described above for first pressure sensitive adhesive polymeric foam layer.

According to a particular aspect of the pressure sensitive adhesive assemblies of the present disclosure, the second pressure sensitive adhesive layer and/or the third pressure sensitive adhesive layer comprise a polymer base material further comprising a polar comonomer, preferably a polar acrylate comonomer. Preferably, the polar comonomer is selected from the group consisting of acrylic acid; methacrylic acid; itaconic acid; hydroxyalkyl acrylates; nitrogen-containing acrylate monomers, in particular acrylamides and substituted acrylamides, acrylamines and substituted acrylamines; and any combinations or mixtures thereof.

In an advantageous aspect of the pressure sensitive adhesive assemblies of the present disclosure, the second pressure sensitive adhesive layer and/or the third pressure sensitive adhesive layer comprise a polymer base material which further comprises a second monomer having an ethylenically unsaturated group, preferably a second non-polar monomer having an ethylenically unsaturated group. Advantageously, the second monomer having an ethylenically unsaturated group for use herein is selected from the group consisting of isobornyl (meth)acrylate, cyclohexyl (meth)acrylate, isophoryl (meth)acrylate, cyclohexyl (meth)acrylate, and any combinations or mixtures thereof; more preferably, the second monomer is selected to be isobornyl (meth)acrylate.

According to some aspects of the pressure sensitive adhesive assemblies of the present disclosure, the second pressure sensitive adhesive layer and/or the third pressure sensitive adhesive layer comprises a polymer base material which further comprises a tackifying resin, in particular a hydrocarbon tackifying resin. Advantageously, the tackifying resin is selected from the group consisting of C5-based hydrocarbon resins, C9-based hydrocarbon resins, C5/C9-based hydrocarbon resins, and any combinations or mixtures or hydrogenated versions thereof.

According to an advantageous aspect of the pressure sensitive assembly of the present disclosure, the polymerizable material used to produce the second pressure sensitive adhesive layer and/or the third pressure sensitive adhesive layer, comprises:
a) from 50 to 99.5 weight percent, or from 60 to 95 weight percent, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate; optionally
b) from 1.0 to 50 weight percent, from 3.0 to 40 weight percent, from 5.0 to 35 weight percent, or even from 10 to 30 weight percent, of the second monomer having an ethylenically unsaturated group, preferably a second non-polar monomer having an ethylenically unsaturated group; optionally
c) from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a polar monomer, preferably a polar acrylate; and optionally
d) a tackifying resin,
wherein the weight percentages are based on the total weight of polymerizable material used to produce the second pressure sensitive adhesive layer and/or the third pressure sensitive adhesive layer.

According to an advantageous aspect of the pressure sensitive adhesive assemblies of the present disclosure, the second pressure sensitive adhesive layer and/or the third pressure sensitive adhesive layer comprise a polymer base material which further comprises a chlorinated polyolefinic (co)polymer. The incorporation of chlorinated polyolefinic (co)polymers in the curable precursor of the second pressure sensitive adhesive layer and/or the third pressure sensitive adhesive layer significantly improves the stability upon heat bond ageing and heat/humidity bond ageing of the resulting pressure sensitive adhesive polymer layers, in particular on low surface energy (LSE) substrates.

Examples of suitable chlorinated polyolefinic (co)polymers for use herein include those sold under the trade designation: "CPO 343-1", sold by Eastman Chemical Co.; "13-LP", "15-LP", "16-LP" and "17-LP" sold by Toyo Kasei Kogyo Co.Ltd; "Hypalon™ CP 827B"," Hypalon™ CP 163 " and "Hypalon™ CP 183 " sold by DuPont Co.; and "Tyrin™ CPE 4211P", "Tyrin™ CPE 6323A" and "Tyrin™ CPE 3615P" sold by Dow Chemical Co. In a preferred aspect, "CPO 343-1" is used as chlorinated polyolefinic (co)polymer.

According to a preferred aspect of the present disclosure, the curable precursor of the second pressure sensitive adhesive layer and/or the third pressure sensitive adhesive layer comprises a chlorinated polyolefinic (co)polymer, which is selected from the group consisting of chlorinated polypropylene, chlorinated polyethylene, chlorinated ethylene/vinyl acetate copolymer, and any combinations, mixtures or copolymers thereof. More preferably, the chlorinated polyolefinic (co)polymer is selected from the group of chlorinated polypropylenes.

According to an advantageous aspect, the specific pressure sensitive adhesive assemblies as described above are obtained by a wet-on-wet coating process step. Exemplary "wet-in-wet" production processes for use herein are described in details in e.g. WO-A1-2011094385 (Hitschmann et al.) or in EP-A1-0259094 (Zimmerman et al.).

In the context of the present invention, it has been found that the pressure sensitive adhesive compositions of the present disclosure, albeit comprising a relatively high overall (meth)acrylic acid concentration, do not lead to (or substantially reduce) the potentially issue of (meth)acrylic acid monomers diffusion to the adjacent layer(s). This unwanted diffusion phenomenon may in particular occur in those multilayer assemblies comprising a layer having a relatively high concentration of (meth)acrylic acid monomer units adjacent to a layer having a relatively low concentration of acrylic acid monomer units, and is typically particularly prone to affect multilayer assemblies obtained by a wet-on-wet coating process step.

According to another aspect, the present disclosure relates to a method of manufacturing a pressure sensitive adhesive assembly as described above, wherein the method comprises the steps of:
a) providing a (liquid) precursor of the first pressure sensitive adhesive polymeric foam layer; and
b) providing a (liquid) precursor of the second pressure sensitive adhesive layer;
c) optionally, providing a (liquid) precursor of the third pressure sensitive adhesive layer;
d) superimposing the (liquid) precursor of the first pressure sensitive adhesive polymeric foam layer, the (liquid) precursor of the second pressure sensitive adhesive layer, and optionally the (liquid) precursor of the third pressure sensitive adhesive layer, thereby forming a curable precursor of the pressure sensitive adhesive assembly;
e) curing the curable precursor of the pressure sensitive adhesive assembly obtained in step d), preferably with actinic radiation.

In some advantageous aspects of the method for manufacturing a multilayer pressure sensitive adhesive assembly, a (lower) layer of a curable (liquid) precursor of the second pressure sensitive adhesive layer is covered by an adjacent (upper) layer of a curable liquid precursor of the first pressure sensitive adhesive polymeric foam layer, respectively, essentially without exposing the (lower) layer of a curable (liquid) precursor of the second pressure sensitive adhesive layer.

According to a beneficial aspect, the method for manufacturing a multilayer pressure sensitive adhesive assembly comprises a wet-on-wet coating process step.

In one exemplary aspect, the method according to the present disclosure is a continuous and self-metered method for manufacturing a multilayer pressure sensitive adhesive assembly. According to this aspect, the method for manufacturing a multilayer pressure sensitive adhesive assembly may optionally comprise the steps of:
e) providing two or more coating knives which are offset, independently from each other, from the substrate to form a gap normal to the surface of the substrate;
f) moving the substrate relative to the coating knives in a downstream direction;
g) providing a curable (liquid) precursor of the first pressure sensitive adhesive polymeric foam layer, a curable (liquid) precursor of the second pressure sensitive adhesive layer, optionally a curable (liquid) precursor of the third pressure sensitive adhesive layer, to the upstream side of the coating knives thereby coating the two or more curable liquid precursors through the respective gaps as superimposed layers onto the substrate.

Practicing the continuous and self-metered method for manufacturing a multilayer pressure sensitive adhesive assembly as above-described is well within the capabilities of the person skilled in the art, in the light of the present disclosure together with the disclosure of WO-A1-2011094385 (Hitschmann et al.). In particular, suitable settings and configurations for the coating apparatus, coating knives and coating stations, for use in this particular aspect of the method for manufacturing a multilayer pressure sensitive adhesive assembly, will be easily identified by those skilled in the art, in the light of the present disclosure together with the disclosure of WO-A1-2011094385 (Hitschmann et al.).

According to an alternative aspect of the present disclosure, the method for manufacturing a multilayer pressure sensitive adhesive assembly comprises a (co)extrusion processing step.

According to another alternative aspect of the method for manufacturing a multilayer pressure sensitive adhesive assembly, the first pressure sensitive adhesive polymeric foam layer, the second pressure sensitive adhesive layer, and optionally the third pressure sensitive adhesive layer, are prepared separately and subsequently laminated to each other.

According to some advantageous aspects, the multilayer pressure sensitive adhesive assemblies as described above have a static shear strength value of more than 2000 min, more than 4000 min, more than 6000 min, more than 8000 min, or even more than 10000 min, when measured at 70°C according to the static shear test method described in the experimental section.

According to some other advantageous aspects, the multilayer pressure sensitive adhesive assemblies as described above have a static shear strength value of more than 2000 min, more than 4000 min, more than 6000 min, more than 8000 min, or even more than 10000 min, when measured at 90°C according to the static shear test method described in the experimental section.

The pressure sensitive adhesive compositions and assemblies of the present disclosure can be coated/applied upon a variety of substrates to produce adhesive-coated articles. The substrates can be flexible or inflexible and be formed of a polymeric material, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polymethyl(meth)acrylate (PMMA), cellulose acetate, cellulose triacetate, and ethyl cellulose. Foam backings may be used. Examples of other substrates include, but are not limited to, metal such as stainless steel, metal or metal oxide coated polymeric material, metal or metal oxide coated glass, and the like.

The pressure sensitive adhesive compositions and assemblies of the present disclosure may be used in any article conventionally known to use such assemblies such as labels, tapes, signs, covers, marking indices, display components, touch panels, and the like.

The pressure sensitive adhesive compositions and assemblies may be coated/applied on a substrate using any conventional coating techniques modified as appropriate to the particular substrate. For example, pressure sensitive adhesive assemblies may be applied/coated to a variety of solid substrates by methods such as roller coating, flow coating, dip coating, spin coating, spray coating knife coating, and die coating. These various methods of coating allow the pressure sensitive adhesive compositions and assemblies to be placed on the substrate at variable thicknesses thus allowing a wider range of use of the assemblies.

The pressure sensitive adhesive compositions and assemblies according to the present disclosure may be particularly useful for forming strong adhesive bonds to low surface energy (LSE) substrates. Included among such materials are polypropylene, polyethylene (e.g., high density polyethylene or HDPE), blends of polypropylene (e.g. PP/EPDM, TPO), or even some clear coat surfaces. Other substrates may also have properties of low surface energy due to a residue, such as an oil residue or a film, such as paint, being on the surface of the substrate.

However, even though the pressure sensitive adhesive compositions and assemblies bond well to low surface energy surfaces, the use of these adhesives is not limited to low surface energy substrates. The pressure sensitive adhesives compositions and assemblies surprisingly bond well to medium surface energy (MSE) substrates such as, for example, polyamide 6 (PA6), acrylonitrile butadiene styrene (ABS), PC/ABS blends, PC, PVC, PA, PUR, TPE, POM, polystyrene, poly(methyl methacrylate) (PMMA), some clear coat surfaces, in particular clear coats for vehicles like a car or coated surfaces for industrial applications and composite materials like fiber reinforced plastics.

Surprisingly still, the pressure sensitive adhesive compositions and assemblies according to the present disclosure also provide strong adhesive bond to higher surface energy (HSE) substrates such as, for example, ceramics, glasses, and metals.

Accordingly, the present disclosure is further directed to the use of pressure sensitive adhesive compositions and assemblies as above described for the bonding to a low surface energy substrate, a medium surface energy substrate and/or a high surface energy substrate.

The substrate to which the pressure sensitive adhesive compositions and assemblies may be applied is selected depending on the particular application. For example, the pressure sensitive adhesive assembly, in particular via its second and/or third pressure sensitive adhesive layer may be applied to sheeting products (e.g., decorative graphics and reflective products), label stock, and tape backings. Additionally, the pressure sensitive adhesive composition and assembly may be applied directly onto other substrates such as a metal panel (e.g., automotive panel) or a glass window so that yet another substrate or object can be attached to the panel or window. Accordingly, the pressure sensitive adhesive compositions and assemblies of the present disclosure may find a particular use in the automotive manufacturing industry (e.g. for attachment of exterior trim parts or for weatherstrips), in the construction industry or in the solar panel construction industry.

Accordingly, the present disclosure is further directed to the use of pressure sensitive adhesive compositions and assemblies as above described for industrial applications, in particular for construction applications and automotive applications.

### EXAMPLES

The present disclosure is further illustrated by the following examples. These examples are merely for illustrative purposes only and are not meant to be limiting on the scope of the appended claims.

### Test Methods applied:

### 90°-Peel-test at 300 mm/min (according to Test Method, Finat No. 2):

Pressure sensitive adhesive compositions and assemblies strips according to the present disclosure and having a width of 10 mm and a length > 175 mm are cut out in the machine direction from the sample material.

For test sample preparation, the liner is first removed from the one adhesive side and placed on an aluminum strip having the following dimension 22 x 1.6 cm. Then, the adhesive coated side of each PSA strip is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive compositions and assemblies strips to the test panel, the test samples are allowed to dwell 72 hours at ambient room temperature (23°C +/- 2°C, 50% relative humidity +/-5%°C) prior to testing.

For peel testing, the test samples are in a first step clamped in the lower movable jaw of a Zwick tensile tester (Model Z020 commercially available from Zwick/Roell GmbH, Ulm, Germany). The pressure sensitive adhesive film strips are folded back at an angle of 90° and their free ends grasped in the upper jaw of the tensile tester in a configuration commonly utilized for 90° peel measurements. The tensile tester is set at 300 mm per minute jaw separation rate. Test results are expressed in Newton per 10 mm (N/10 mm). The quoted peel values are the average of two 90°-peel measurements.

### Static shear test at 70°C or 90°C with 500 g (FINAT Test Method No. 8, 8^{th} edition 2009)

The static shear is a measure of the cohesiveness or internal strength of an adhesive. It is measured in units of time (minutes) required to pull a standard area of adhesive sheet material from a test panel under stress of a constant, standard load.

A strip of 25 mm wide and 12.7 mm long is cut in machine direction from the cured pressure sensitive adhesive sample. One release liner is removed from the strip and the PSA sample is attached through its exposed adhesive surface onto an anodized aluminum backing. Then, the second release liner is removed and the PSA sample is attached to the test substrate, providing a bond area of 25 mm x 12.7 mm and using light finger pressure. The standard FINAT test roller (6.8 kg) is rolled one time in each direction at a speed of approximately 10 mm per second to obtain intimate contact between the adhesive mass and the substrate surface. After applying the PSA strip to the test plate, the test plate is left at room temperature for a period of 24 h before testing. A loop is prepared at the end of the test strip in order to hold the specified weight. The test panel is placed in a shear holding device. After a 15 min dwell time at the test temperature of 70°C or 90°C, the 500 g load is attached in the loop. The timer is started. The results are recorded in minutes and are the average of three shear measurements. A recorded time of "10000+" indicates that the adhesive does not fail after 10000 min.

### Test Method for measuring foam split level (cohesion failure level)

The foam split level is another measure of the cohesiveness or internal strength of an adhesive. The cohesion failure level is measured according to the 90°-Peel-test at 300 mm/min described in details above. For the foam split testing, the test samples are in a first step primed with 3M Primer 94.

### Glass transition temperature (Tg)

The glass transition temperature of the copolymers for use herein are measured by Dynamic Mechanical Thermal Analysis. Dynamic mechanical analysis and sample preparation are performed according to ASTM E1640-13 standard and standards mentioned within. Dynamic mechanical measurements are performed on an ARES strain-controlled rotational rheometer (available from TA Instruments, U.S.A.) in oscillatory shear using a parallel plate geometry (diameter: 8 mm, gap: 0.5 mm) at a fixed frequency of 1 Hz and a variable strain from 0.01 to 15 % in a temperature range from -70 to +150°C with a heating rate of 5 °C/min using a forced convection oven. The temperature of the tangent delta (loss factor) peak maximum is taken to represent the temperature range over which the glass transition takes place, which is referred to as the glass transition temperature Tg. Samples of circular shape measuring a diameter of 8 mm and a height of about 0.5 mm are used.

### Test Substrates used for testing:

The pressure sensitive adhesive compositions and assemblies according to the present disclosure are tested for their adhesive properties on following substrates:
- Steel: Stainless Steel (SS) plate ("Edelstahl 1.4301 IIID", 150 mm x 50 mm x 2 mm), available from Rocholl GmbH, Aglatershausen, Germany.
- PP: polypropylene plate (150 mm x 50 mm x 2 mm) with protective film, available from Aquarius Plastics Ltd, UK.
- PP/EPDM: polypropylene/ethylene propylene diene monomer plate ("Spritzgussgranulat Exxtral BMU, 150 mm x 25 mm x 2 mm), available from Rocholl GmbH, Aglatershausen, Germany.
- ABS: acrylonitrile butadiene styrene plate (Metzoplast ABS/G, 150 mm x 25 mm x 2 mm), available from Rocholl GmbH, Aglatershausen, Germany.

Prior to testing, the substrates are cleaned as follows:
- The SS plates are first cleaned with MEK and n-heptane, dried with a tissue, and then cleaned with MEK and dried with a tissue.
- The PP/EPDM and ABS panels are cleaned first with a dry tissue applied with gentle force to remove any residuals / waxy compounds on the surface and then cleaned with a mixture of isopropyl alcohol: distilled water (1:1) and dried with a tissue.
- The PP test panels with protective film require no cleaning prior to testing. The only step required consists in removing the protective film before adhesive application.

### Raw materials used:

In the examples, the following raw materials and commercial adhesive tapes used are used:
**2-Ethylhexylacrylate** (2-EHA, C8-acrylate) is an ester of 2-ethylalcohol and acrylic acid which is obtained from BASF AG, Germany.
**Acrylic acid** (AA) is obtained from BASF AG, Germany.
**2-Propylheptylacrylate** (2-PHA; C10-acrylate) is an ester of 2-propylheptanol and acrylic acid which is obtained from BASF AG, Germany. Tg-value: - 68 °C. 2-Propylheptylacrylate is a mixture of 2 isomers with a constant distribution.
**Isobornylacrylate** (SR 506D) is a monofunctional acrylic monomer available from Cray Valley, France.
**Isooctyl thioglycolate** (IOTG) is a chain transfer agent and commercially available by Bruno Bock Chemische Fabrik, Germany.
**Vazo 52** (2,2'-Azobis(2,4 dimethylpentanenitrile)) is a thermal polymerization-initiator and is available from Dupont.
**Omnirad BDK** (2,2-dimethoxy-2-phenylacetophenone) is a UV-initiator and is available from iGm resins, Waalwijk Netherlands.
**1,6-Hexanedioldiacrylate** (HDDA) is a fast curing diacrylate and is obtained from BASF AG, Germany.
**HTGO** is a high Tg acrylic oligomer having a M_{w} of 25.000 g/mol, used as 50wt% dilution in 2-PHA) and prepared according to the procedure described in EP-A1-2803712 (Wieneke et al.) for the copolymer referred to as HTG-1d.
**Arkon P125** a fully hydrogenated hydrocarbon resin, commercially available from Arakawa Chemical Inc., Chicago, II., U.S.A
**3M Glass Bubbles (sK15),** silane-treated hollow glass bubbles with a diameter of 115 micrometers, commercially available by 3M Deutschland GmbH, Germany.
**Aerosil R-972** are hydrophobic fumed silica particles, available from Evonik, Germany.
**3M Primer 94** is a surface adhesion primer, commercially available from the 3M Company, USA.
**3M Tape PX 5011** is an acrylic foam tape, commercially available from the 3M Company, USA.
**3M 9460PC** is a transfer tape, commercially available from the 3M Company, USA.

### Preparation of the second (meth)acrylate copolymer:

Before preparing the precursors used for the pressure sensitive adhesive compositions and the first pressure sensitive adhesive polymeric layers, the second (meth)acrylate copolymer, hereinafter referred to as Polymer 1 and having the composition as shown in Table 1, is prepared as detailed below.

**Table 1**

| **Polymer 1** | **Amount** |
|---|---|
| 2-Ethylhexylacrylate (2-EHA) | 80 wt% |
| Acrylic acid (AA) | 20 wt% |
| Isooctyl thioglycolate (IOTG) | 0.04 wt% |
| Vazo 52 | 3 (ppm) |

The polymerization of various monomers as above described for the preparation of the second (meth)acrylate copolymer is carried out using a 1 liter Büchi Polyclave stainless steel reactor (available from Büchi Labortechnik GmbH, The Netherlands).

In a first step, the Büchi reactor is charged with 250 grams of a mixture consisting of the monomer mixture and amounts shown in Table 1, along with 3 ppm of Vazo 52. The reactor is sealed and purged of oxygen and then held at approximately 1 bar nitrogen pressure. The reaction mixture is heated to 60°C and the reaction proceeds adiabatically. The reaction peak temperature is approximately 110°C. When the reaction is complete, the mixture is cooled to below 50°C. The polymerization conversation is approximately around 35%, and the content of acrylic acid monomer units in the second (meth)acrylate copolymer (Polymer 1) is approximately 20%.

### Preparation of the precursors of the pressure sensitive adhesive compositions and the precursors of the first pressure sensitive adhesive polymeric layers (foam layers):

### Precursors of the pressure sensitive adhesive polymeric layers (FL 1-5):

The precursors of the pressure sensitive adhesive compositions and the corresponding first pressure sensitive adhesive polymeric layers (foam layers), hereinafter referred to as FL 1-5, are prepared by first diluting the second (meth)acrylate copolymer as above-described in a polymerization precursor composition comprising the C8 acrylate (2-EHA) and the acrylic acid (between 3 and 10 wt%). All the time, the resulting composition is mixed by shaking it with a rolling bench (Model LD 209, available from Labortechnik Frobel, Germany) propeller stirrer (150 U/min) for about 24 hours, and the mixing is stopped when a clear homogeneous mixture is obtained. Then, the photoinitiator Omnirad BDK, the HDDA crosslinker, and the fumed silica particles are added and again mixed by shaking for about 24 hours. In a third step, the glass bubbles are added and the mixture is stirred with a propeller stirrer (300 U/min) for 5 minutes until they have dispersed. The exact formulations of the polymerization precursor compositions for the first pressure sensitive adhesive polymeric layers are listed in Table 2 below. The corresponding first (meth)acrylate copolymers are formed *in-situ* in presence of the second (meth)acrylate copolymer.

### Precursors of the comparative pressure sensitive adhesive polymeric layers (CFL 1 -5):

The precursors of comparative pressure sensitive adhesive polymeric layers (foam layers), hereinafter referred to as CFL 1-5 - and not comprising the second (meth)acrylate copolymer - are prepared by combining the C8 acrylate (2-EHA) and the acrylic acid (between 3 and 10 wt%) with 0.04 pph of Omnirad as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 23°C, spindle 4, 12 rpm). Additionally, the remaining amount of Omnirad BDK, the HDDA crosslinker, the glass bubbles and the fumed silica particles are added to the composition and mixed until they have dissolved / dispersed. The exact formulations of the polymerization precursor compositions for pressure sensitive adhesive polymeric layers CFL 1-5 are listed (in pph) in Table 2 below.

**Table 2**

| | FL 1 | FL 2 | FL 3 | FL 4 | FL 5 | CFL 1 | CFL 2 | CFL 3 | CFL 4 |
|---|---|---|---|---|---|---|---|---|---|
| 2-EHA | 97 | 95 | 92.5 | 90 | 97 | 97 | 95 | 92.5 | 90 |
| AA | 3 | 5 | 7.5 | 10 | 3 | 3 | 5 | 7.5 | 10 |
| Polymer 1 | 8 | 8 | 8 | 8 | 8 | - | - | - | - |
| HDDA | 0.1 | 0.1 | 0.1 | 0.1 | 0.06 | 0.1 | 0.1 | 0.1 | 0.1 |
| Omnirad BDK | 0.2 | 0.2 | 0.2 | 0.2 | 0.2 | 0.2 | 0.2 | 0.2 | 0.2 |
| Aerosil | 2 | 2 | 2 | 2 | 2 | 2 | 2 | 2 | 2 |
| GB sK15 | 12 | 12 | 12 | 12 | 10 | 12 | 12 | 12 | 12 |

### Preparation of the precursors of the second pressure sensitive adhesive layer SL 1 (skin layer):

The precursor of the second pressure sensitive adhesive layer (skin layer), hereinafter referred to as SL 1, is prepared by combining the C10 acrylate (2-PHA) and the acrylic acid with 0.04 pph of Omnirad as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 25 °C, spindle 4, 12 rpm). Additionally, the remaining amount of Omnirad BDK, the HDDA crosslinker, the monomeric IBOA, the HTGO oligomer and the hydrocarbon tackifier are added to the composition and mixed until they have dissolved/dispersed. The HTGO is added as a dilution in 2-PHA. The exact formulation of the polymerization precursor composition for the second pressure sensitive adhesive layer SL 1 is listed (in pph) in Table 3 below.

**Table 3**

| | 2-PHA | AA | IBOA | HTGO | Omnirad BDK | HDDA | Arkon P-125 |
|---|---|---|---|---|---|---|---|
| SL 1 | 97 | 3 | 10 | 10 | 0.2 | 0.2 | 10 |

### Preparation of the self-standing pressure sensitive adhesive polymeric foam layers for Ex.1 to Ex.4 and Ex.Cl to Ex.C4

The pressure sensitive adhesive polymeric foam layers are obtained by coating the upper precursors of the first pressure sensitive adhesive polymeric layers FL 1-4 and CFL 1-4 on 75 micrometers solvent free siliconized PET-liners (SLVK-Liner having a dimension of 300mm x 300 mm) using a dual-liner coater. The line speed of the coater is set to 0.82 m/min. The resulting adhesive layers thickness is about 1.2 mm. Curing is accomplished from both top and bottom side in a UV-curing station with a length of 300 cm at the line speed given above. The total radiation intensity irradiated cumulatively from top and bottom is approximately 3 mW/cm².

### Preparation of the multilayer pressure sensitive adhesive assemblies for Ex.5 to Ex.7

The multilayer pressure sensitive adhesive assemblies are obtained by lamination of the pressure sensitive adhesive polymeric layers FL 1-4 and CFL 1-4 obtained as described above with 3M transfer tape 9460PC (working as second pressure sensitive adhesive skin layer). The lamination is carried out at a temperature of 100°C by the use of a laminator from the company Sallmetall. The contact pressure is between 1-2 bar with a velocity of 1 m/min. The film is subjected twice to this procedure. After the lamination, the multilayer PSA assemblies are allowed to dwell for 72h at room temperature (23°C +/- 2°C) prior to testing.

### Preparation of the multilayer pressure sensitive adhesive assemblies for Ex.8

The precursors of the pressure sensitive adhesive layer skin SL 1 and of the first pressure sensitive adhesive polymeric foam core layer FL 5, are superimposed onto each other in a coater, according to the method described in WO-A1-2011094385 (Hitschmann et al.). Hereby, the liquid precursor of the pressure sensitive adhesive skin layer LS 1 is coated on the bottom of the pressure sensitive adhesive polymeric foam core layer FL 5. The knife height setting is 130-140 micrometers for the first knife (for the pressure sensitive adhesive skin layer LS 1) and 1240-1250 micrometers for the second knife (for the polymeric foam core layer FL 5), both levels calculated from the substrate surface. Curing is accomplished from both top and bottom side in a UV-curing station with a length of 300 cm at the line speed set to 0.82 m/min. The total radiation intensity irradiated cumulatively from top and bottom is approximately 3 mW/cm².

### Examples used for testing

The tested examples are listed in Table 4 below.

**Table 4**

| Example No. | Polymeric foam layer used | Skin layer used |
|---|---|---|
| Ex.1 | LF 1 | None |
| Ex.2 | LF 2 | None |
| Ex.3 | LF 3 | None |
| Ex.4 | LF 4 | None |
| Ex.5 | LF 1 | (9460 PC) on one side |
| Ex.6 | LF 2 | (9460 PC) on one side |
| Ex.7 | LF 3 | (9460 PC) on one side |
| Ex.8 | LF 5 | SL 1 |
| C1 | LF 1 | None |
| C2 | LF 2 | None |
| C3 | LF 3 | None |
| C4 | LF 4 | None |
| C5 | LF 1 | (9460 PC) on one side |
| C6 | LF 2 | (9460 PC) on one side |
| C7 | LF 3 | (9460 PC) on one side |

### Test Results

### Foam split level (cohesion failure level) on primed stainless steel

**Table 5**

| Example No. | Cohesion failure value (N/cm) | Failure Mode |
|---|---|---|
| C1 | 55 | FS |
| Ex.1 | 73 | FS |
| C2 | 55 | MIX |
| Ex.2 | 66 | MIX |
| C3 | 42 | PO |
| Ex.3 | 59 | MIX |
| C4 | 39 | PO |
| Ex.4 | 54 | MIX |

| | | |
|---|---|---|
| FS denotes foam split (cohesive failure); PO denotes pop-off (adhesive failure from stainless steel); and MIX denotes mix of pop-off and foam split. | | |

The results of the foam split experiments performed on stainless steel substrate primed with 3M primer 94, are shown in Table 5. Table 5 shows the consistently improved mechanical performance obtained with self-standing pressure sensitive adhesive compositions according to the disclosure (Ex.1 to Ex.4) when compared to the compositions of comparative examples C1 to C4 (not comprising the second (meth)acrylate copolymer).

### 90°Peel on stainless steel (72h, room temperature)

**Table 6**

| Example No. | Peel value (N/cm) |
|---|---|
| C2 | 12 |
| Ex.2 | 26 |

The increased peel adhesion performance of a self-standing pressure sensitive adhesive composition according to the disclosure (Ex.2) when compared to a composition of comparative example C2 is clearly apparent from the results shown in Table 6.

### 90°Peel on stainless steel (72h, room temperature)

**Table 7**

| Example No. | Peel value (N/cm) | Failure mode |
|---|---|---|
| C5 | 49 | FS |
| Ex.5 | 70 | FS |
| C6 | 36 | PO |
| Ex.6 | 71 | FS |
| C7 | 40 | PO |
| Ex.7 | 64 | FS |

| | | |
|---|---|---|
| FS denotes foam split (cohesive failure); PO denotes pop-off (adhesive failure from stainless steel); and MIX denotes mix of pop-off and foam split. | | |

The increased peel adhesion performance obtained with laminated pressure sensitive adhesive assemblies according to the disclosure (Ex.5 to Ex.7) when compared to laminated assemblies based on comparative examples C5 to C7 is clearly apparent from the results shown in Table 7.

### 90°Peel performance of Ex.8 on various substrates (72h, room temperature)

Table 8 shows the 90° peel values of the multilayer pressure sensitive adhesive assembly according to Ex.8 after 72h dwell time at room temperature (RT) to PP, ABS, stainless steel (SS) and PP/EPDM test substrates.

**Table 8**

| Ex. No | 90°Peel on PP 72h/RT (N/cm) | 90° Peel on ABS 72h/RT (N/cm) | 90°Peel on SS 72h/RT (N/cm) | 90°Peel on PP/EPDM 72h/RT (N/cm) |
|---|---|---|---|---|
| Ex.8 | 73 | 68 | 69 | 73 |
| PX 5011 | 20 | 42 | 44 | 42 |

Table 8 shows the consistently improved peel adhesion performance obtained with a multilayer pressure sensitive adhesive composition according to the disclosure (Ex.8) when compared to a comparative coµµercially available acrylic foam tape (PX 5015).

### Static shear performance of Ex.8 on various substrates

Table 9 shows the static shear performance of the multilayer pressure sensitive adhesive assembly according to Ex.8 at 70°C and 90°C on SS, ABS and PP test substrates.

**Table 9**

| Ex. No | Static Shear at 70°C to SS, 500g weight (min) | Static Shear at 70°C to ABS, 500g weight (min) | Static Shear at 70°C to PP, 500g weight (min) | Static Shear at 90°C to SS, 500g weight (min) |
|---|---|---|---|---|
| Ex.8 | 10000+ | 10000+ | 10000+ | 10000+ |

Table 9 shows the outstanding static shear performance obtained with a multilayer pressure sensitive adhesive composition according to the disclosure (Ex.8) on various types of substrates and at elevated temperatures.

## Claims

1. A pressure sensitive adhesive polymeric foam composition, comprising:
a) a first (meth)acrylate copolymer comprising from 0.1 to 12 wt% of (meth)acrylic acid monomer units, based on the weight of the first (meth)acrylate copolymer; and
b) a second (meth)acrylate copolymer comprising from 15 to 40 wt% of (meth)acrylic acid monomer units, based on the weight of the second (meth)acrylate copolymer.

2. A pressure sensitive adhesive composition according to claim 1, wherein the second (meth)acrylate copolymer comprises (meth)acrylic acid monomer units in an amount greater than 15 wt%, greater than 16 wt%, or even greater than 17 wt%, based on the weight of the first (meth)acrylate copolymer.

3. A pressure sensitive adhesive composition according to any of claims 1 or 2, wherein:
a) the first (meth)acrylate copolymer comprises from 0.1 to 11 wt%, from 0.1 to 10 wt%, from 0.2 to 10 wt%, from 0.2 to 9 wt%, from 0.2 to 8 wt%, from 0.3 to 8 wt%, from 0.5 to 8 wt%, from 0.5 to 6 wt%, from 1 to 6 wt%, or even from 1 to 5 wt%, of (meth)acrylic acid monomer units, based on the weight of the first (meth)acrylate copolymer; and
b) the second (meth)acrylate copolymer comprises from 16 to 40 wt%, from 16 to 35 wt%, from 16 to 30 wt%, from 16 to 25 wt%, from 17 to 25 wt%, from 17 to 23 wt%, or even from 17 to 20 wt% of (meth)acrylic acid monomer units, based on the weight of the second (meth)acrylate copolymer.

4. A pressure sensitive adhesive composition according to any of the preceding claims, wherein:
a) the first (meth)acrylate copolymer has a Tg no greater than 0°C; and
b) the second (meth)acrylate copolymer has a Tg greater than 0ºC, and wherein the glass transition temperature of the copolymers is measured by Dynamic Mechanical Thermal Analysis according to ASTM E1640-13 standard.

5. A pressure sensitive adhesive composition according to any of the preceding claims, wherein:
a) the first (meth)acrylate copolymer has a Tg comprised between -70°C and 0°C, between -70°C and -10°C, -60°C and -10°C, between -60°C and -20°C, between - 60°C and -30°C, between -55°C and -35°C, or even between -50°C and -40°C; and
b) the second (meth)acrylate copolymer has a Tg comprised between 2°C and 100°C, between 2°C and 80°C, between 2°C and 60°C, between 2°C and 50°C, between 2°C and 45°C, between 5°C and 45°C, between 5°C and 40°C, between 5°C and 35°C, or even between 10°C and 30°C.

6. A pressure sensitive adhesive composition according to any of the preceding claims, wherein the second (meth)acrylate copolymer has a Tg, no greater than 100°C, no greater than 80°C, no greater than 60°C, no greater than 50°C, no greater than 45°C, or even no greater than 40°C.

7. A pressure sensitive adhesive composition according to any of the preceding claims, which comprises:
a) from 65 to 99 wt%, from 70 to 95 wt%, from 75 to 95 wt%, from 75 to 90 wt%, or even from 75 to 85 wt%, of the first (meth)acrylate copolymer; and
b) from 1 to 35 wt%, from 1 to 30 wt%, from 2 to 25 wt%, from 3 to 25 wt%, from 3 to 20 wt%, from 4 to 20 wt%, or even from 4 to 15 wt%, of the second (meth)acrylate copolymer;
wherein the weight percentages are based on the total weight of the pressure sensitive adhesive composition.

8. A pressure sensitive adhesive composition according to any of the preceding claims, wherein the first (meth)acrylate copolymer comprises:
a) from 0.1 to 11 wt%, from 0.1 to 10 wt%, from 0.2 to 10 wt%, from 0.2 to 9 wt%, from 0.2 to 8 wt%, from 0.3 to 8 wt%, from 0.5 to 8 wt%, from 0.5 to 6 wt%, from 1 to 6 wt%, or even from 1 to 5 wt%, of (meth)acrylic acid monomer units, based on the weight of the first (meth)acrylate copolymer; and
b) from 89 to 99.9 wt%, from 90 to 99.9 wt%, from 90 to 99.8 wt%, from 91 to 99.8 wt%, from 92 to 99.8 wt%, from 92 to 99.7 wt%, from 92 to 99.5 wt%, from 94 to 99.5 wt%, from 94 to 99 wt%, or even from 95 to 99 wt%, of linear or branched C₁-C₃₂ (meth)acrylic acid ester monomer units, C₁-C₂₄ (meth)acrylic acid ester monomer units, or even C₁-C₁₈ (meth)acrylic acid ester monomer units, based on the weight of the first (meth)acrylate copolymer.

9. A pressure sensitive adhesive composition according to any of the preceding claims, wherein the second (meth)acrylate copolymer comprises:
a) from 13 to 35 wt%, from 13 to 30 wt%, from 15 to 30 wt%, from 15 to 25 wt%, or even from 17 to 23 wt%, of (meth)acrylic acid monomer units, based on the weight of the second (meth)acrylate copolymer; and
b) from 65 to 87 wt%, from 70 to 87 wt%, from 70 to 85 wt%, from 75 to 85 wt%, or even from 77 to 83 wt%, of linear or branched C₁-C₃₂ (meth)acrylic acid ester monomer units, C₁-C₂₄ (meth)acrylic acid ester monomer units, or even C₁-C₁₈ (meth)acrylic acid ester monomer units, based on the weight of the second (meth)acrylate co)polymer.

10. A pressure sensitive adhesive composition according to any of the preceding claims, which comprises:
a) from 65 to 99 wt%, from 70 to 95 wt%, from 75 to 95 wt%, from 75 to 90 wt%, or even from 75 to 85 wt%, of the first (meth)acrylate copolymer;
b) from 1 to 35 wt%, from 1 to 30 wt%, from 2 to 25 wt%, from 3 to 25 wt%, from 3 to 20 wt%, from 4 to 20 wt%, or even from 4 to 15 wt%, of the second (meth)acrylate copolymer; and
c) optionally, from 2 wt% to 30 wt%, from 2 wt% to 20 wt%, or even from 2 wt% to 15 wt% of a filler material preferably selected from the group of expandable microspheres and glass bubbles;
wherein the weight percentages are based on the total weight of the pressure sensitive adhesive composition.

11. A multilayer pressure sensitive adhesive assembly comprising a pressure sensitive adhesive composition according to any of the preceding claims in the form of a first pressure sensitive adhesive polymeric foam layer and which further comprises a second pressure sensitive adhesive layer adjacent to the first pressure sensitive adhesive polymeric layer.

12. A multilayer pressure sensitive adhesive assembly according to claim 11, which is obtained by a wet-on-wet coating process step.

13. A method of manufacturing a pressure sensitive adhesive composition according to any of claims 1 to 10, which comprises the steps of:
a) providing the second (meth)acrylate copolymer comprising from 15 to 40 wt% of (meth)acrylic acid monomer units, based on the weight of the second (meth)acrylate copolymer; and
b) incorporating the second (meth)acrylate copolymer into a curable precursor composition comprising the main monomer units used to prepare the first (meth)acrylate copolymer, (meth)acrylic acid monomer units, optionally a polymerization initiator, optionally a crosslinker, and optionally a particulate filler material, thereby forming a curable precursor composition of the pressure sensitive composition; and
c) curing the curable precursor composition of the pressure sensitive composition obtained in step b), preferably with actinic radiation.

14. A method according to claim 13, wherein the second (meth)acrylate copolymer is obtained by free-radical polymerization, in particular by an essentially solventless polymerization method, more in particular by an essentially adiabatic polymerization reaction.

15. Use of a pressure sensitive adhesive composition according to any of claims 1 to 10 or a pressure sensitive adhesive assembly according to any of claims 11 to 12 for the bonding to a low surface energy substrate, a medium surface energy substrate and/or a high surface energy substrate, preferably for the bonding to a low surface energy substrate or a medium surface energy substrate.

## Patentansprüche

1. Eine druckempfindliche Klebstoffpolymerschaumzusammensetzung, umfassend:
a) ein erstes (Meth)acrylatcopolymer, umfassend zu 0,1 bis 12 Gew.-% (Meth)-acrylsäuremonomereinheiten, bezogen auf das Gewicht des ersten (Meth)acrylatco-polymers; und
b) ein zweites (Meth)acrylatcopolymer, umfassend zu 15 bis 40 Gew.-% (Meth)-acrylsäuremonomereinheiten, bezogen auf das Gewicht des zweiten (Meth)acrylatco-polymers.

2. Eine druckempfindliche Klebstoffzusammensetzung nach Anspruch 1, wobei das zweite (Meth)acrylatcopolymer (Meth)acrylsäuremonomereinheiten in einer Menge von mehr als 15 Gew.-%, mehr als 16 Gew.-% oder sogar mehr als 17 Gew.-%, bezogen auf das Gewicht des ersten (Meth)acrylatcopolymers, umfasst.

3. Eine druckempfindliche Klebstoffzusammensetzung nach einem der Ansprüche 1 oder 2, wobei:
a) das erste (Meth)acrylatcopolymer zu 0,1 bis 11 Gew.-%, zu 0,1 bis 10 Gew.-%, zu 0,2 bis 10 Gew.-%, zu 0,2 bis 9 Gew.-%, zu 0,2 bis 8 Gew.-%, zu 0,3 bis 8 Gew.-%, zu 0,5 bis 8 Gew.-%, zu 0,5 bis 6 Gew.-%, zu 1 bis 6 Gew.-% oder sogar zu 1 bis 5 Gew.-% (Meth)acrylsäuremonomereinheiten, bezogen auf das Gewicht des ersten (Meth)acrylatcopolymers, umfasst; und
b) das zweite (Meth)acrylatcopolymer zu 16 bis 40 Gew.-%, zu 16 bis 35 Gew.-%, zu 16 bis 30 Gew.-%, zu 16 bis 25 Gew.-%, zu 17 bis 25 Gew.-%, zu 17 bis 23 Gew.-% oder sogar zu 17 bis 20 Gew.-% (Meth)acrylsäuremonomereinheiten, bezogen auf das Gewicht des zweiten (Meth)acrylatcopolymers, umfasst.

4. Eine druckempfindliche Klebstoffzusammensetzung nach einem der vorstehenden Ansprüche, wobei:
a) das erste (Meth)acrylatcopolymer eine Tg von nicht mehr als 0 °C aufweist; und
b) das zweite (Meth)acrylatcopolymer eine Tg von nicht mehr als 0 °C aufweist, und wobei die Glasübergangstemperatur des Copolymers durch dynamische mechanische Wärmeanalyse gemäß ASTM E1640-13-Standard gemessen wird.

5. Eine druckempfindliche Klebstoffzusammensetzung nach einem der vorstehenden Ansprüche, wobei:
a) das erste (Meth)acrylatcopolymer eine Tg aufweist, die zwischen -70 °C und 0 °C, zwischen -70 °C und -10 °C, -60 °C und -10 °C, zwischen -60 °C und -20 °C, zwischen -60 °C und -30 °C, zwischen -55 °C und -35 °C oder sogar zwischen -50 °C und -40 °C umfasst ist; und
b) das zweite (Meth)acrylatcopolymer eine Tg aufweist, die zwischen 2 °C und 100 °C, zwischen 2 °C und 80 °C, zwischen 2 °C und 60 °C, zwischen 2 °C und 50 °C, zwischen 2 °C und 45 °C, zwischen 5 °C und 45 °C, zwischen 5 °C und 40 °C, zwischen 5 °C und 35 °C oder sogar zwischen 10 °C und 30 °C umfasst ist.

6. Eine druckempfindliche Klebstoffzusammensetzung nach einem der vorstehenden Ansprüche, wobei das zweite (Meth)acrylatcopolymer eine Tg von nicht mehr als 100 °C, nicht mehr als 80 °C, nicht mehr als 60 °C, nicht mehr als 50 °C, nicht mehr als 45 °C oder sogar nicht mehr als 40 °C aufweist.

7. Eine druckempfindliche Klebstoffzusammensetzung nach einem der vorstehenden Ansprüche, die umfasst:
a) zu 65 bis 99 Gew.-%, zu 70 bis 95 Gew.-%, zu 75 bis 95 Gew.-%, zu 75 bis 90 Gew.-% oder sogar zu 75 bis 85 Gew.-% das erste (Meth)acrylatcopolymer; und
b) zu 1 bis 35 Gew.-%, zu 1 bis 30 Gew.-%, zu 2 bis 25 Gew.-%, zu 3 bis 25 Gew.-%, zu 3 bis 20 Gew.-%, zu 4 bis 20 Gew.-% oder sogar zu 4 bis 15 Gew.-% das zweite (Meth)acrylatcopolymer;
wobei die Gewichtsprozentsätze auf dem Gesamtgewicht der druckempfindlichen Klebstoffzusammensetzung basieren.

8. Eine druckempfindliche Klebstoffzusammensetzung nach einem der vorstehenden Ansprüche, wobei das erste (Meth)acrylatcopolymer umfasst:
a) zu 0,1 bis 11 Gew-%, zu 0,1 bis 10 Gew.-%, zu 0,2 bis 10 Gew.-%, zu 0,2 bis 9 Gew.-%, zu 0,2 bis 8 Gew.-%, zu 0,3 bis 8 Gew.-%, zu 0,5 bis 8 Gew.-%, zu 0,5 bis 6 Gew.-%, zu 1 bis 6 Gew.-% oder sogar zu 1 bis 5 Gew.-% (Meth)acrylsäuremono-mereinheiten, bezogen auf das Gewicht des ersten (Meth)acrylatcopolymers; und
b) zu 89 bis 99,9 Gew-%, zu 90 bis 99,9 Gew.-%, zu 90 bis 99,8 Gew.-%, zu 91 bis 99,8 Gew.-%, zu 92 bis 99,8 Gew.-%, zu 92 bis 99,7 Gew.-%, zu 92 bis 99,5 Gew.-%, zu 94 bis 99,5 Gew.-%, zu 94 bis 99 Gew.-% oder sogar zu 95 bis 99 Gew.-% lineare oder verzweigte C₁-C₃₂-(Meth)acrylsäureestermonomereinheiten, C₁-C₂₄-(Meth)acrylsäureestermonomereinheiten oder sogar C₁-C₁₈-(Meth)acrylsäure-estermonomereinheiten, bezogen auf das Gewicht des ersten (Meth)acrylatcopolymers.

9. Eine druckempfindliche Klebstoffzusammensetzung nach einem der vorstehenden Ansprüche, wobei das zweite (Meth)acrylatcopolymer umfasst:
a) zu 13 bis 35 Gew.-%, zu 13 bis 30 Gew.-%, zu 15 bis 30 Gew.-%, zu 15 bis 25 Gew.-% oder sogar zu 17 bis 23 Gew.-% (Meth)acrylsäuremonomereinheiten, bezogen auf das Gewicht des zweiten (Meth)acrylatcopolymers; und
b) zu 65 bis 87 Gew-%, zu 70 bis 87 Gew.-%, zu 70 bis 85 Gew.-%, zu 75 bis 85 Gew.-% oder sogar zu 77 bis 83 Gew.-% lineare oder verzweigte C₁-C₃₂-(Meth)-acrylsäureestermonomereinheiten, C₁-C₂₄-(Meth)acrylsäureestermonomereinheiten oder sogar C₁-C₁₈-(Meth)acrylsäureestermonomereinheiten, bezogen auf das Gewicht des zweiten (Meth)acrylatcopolymers.

10. Eine druckempfindliche Klebstoffzusammensetzung nach einem der vorstehenden Ansprüche, die umfasst:
a) zu 65 bis 99 Gew.-%, zu 70 bis 95 Gew.-%, zu 75 bis 95 Gew.-%, zu 75 bis 90 Gew.-% oder sogar zu 75 bis 85 Gew.-% das erste (Meth)acrylatcopolymer;
b) zu 1 bis 35 Gew-%, zu 1 bis 30 Gew.-%, zu 2 bis 25 Gew.-%, zu 3 bis 25 Gew.-%, zu 3 bis 20 Gew.-%, zu 4 bis 20 Gew.-% oder sogar zu 4 bis 15 Gew.-% das zweite (Meth)acrylatcopolymer; und
c) wahlweise, zu 2 Gew.-% bis 30 Gew.-%, zu 2 Gew.-% bis 20 Gew.-% oder sogar zu 2 Gew.-% bis 15 Gew.-% einen Füllstoff, vorzugsweise ausgewählt aus der Gruppe expandierbarer Mikrokügelchen und Glasblasen;
wobei die Gewichtsprozentsätze auf dem Gesamtgewicht der druckempfindlichen Klebstoffzusammensetzung basieren.

11. Eine mehrschichtige druckempfindliche Klebstoffanordnung, umfassend eine druckempfindliche Klebstoffzusammensetzung nach einem der vorstehenden Ansprüche in Form einer ersten druckempfindlichen Klebstoffpolymerschaumschicht, und die ferner eine zweite druckempfindliche Klebstoffschicht benachbart zu der ersten druckempfindlichen Klebstoffpolymerschicht umfasst.

12. Eine mehrschichtige druckempfindliche Klebstoffanordnung nach Anspruch 11, die durch einen Nass-auf-Nass-Beschichtungsverfahrensschritt erhalten wird.

13. Ein Verfahren zum Herstellen einer druckempfindlichen Klebstoffzusammensetzung nach einem der Ansprüche 1 bis 10, das die Schritte umfasst:
a) Bereitstellen des zweiten (Meth)acrylatcopolymers, umfassend zu 15 bis 40 Gew.-% (Meth)acrylsäuremonomereinheiten, bezogen auf das Gewicht des zweiten (Meth)acrylatcopolymers; und
b) Einbauen des zweiten (Meth)acrylatcopolymers in eine härtbare Vorläuferzusammensetzung, umfassend die Hauptmonomereinheiten, die zur Herstellung des ersten (Meth)acrylatcopolymers verwendet werden, (Meth)acrylsäuremonomereinheiten, wahlweise einen Polymerisationsinitiator, wahlweise einen Vernetzer und wahlweise einen teilchenförmigen Füllstoff, wodurch eine härtbare Vorläuferzusammensetzung der druckempfindlichen Zusammensetzung gebildet wird; und
c) Härten der härtbaren Vorläuferzusammensetzung der in Schritt b) erhaltenen druckempfindlichen Zusammensetzung, vorzugsweise mit aktinischer Strahlung.

14. Ein Verfahren nach Anspruch 13, wobei das zweite (Meth)acrylatcopolymer durch radikalische Polymerisation, insbesondere durch ein im Wesentlichen lösungsmittelfreies Polymerisationsverfahren, insbesondere durch eine im Wesentlichen adiabatische Polymerisationsreaktion erhalten wird.

15. Verwendung einer druckempfindlichen Klebstoffzusammensetzung nach einem der Ansprüche 1 bis 10 oder eine druckempfindliche Klebstoffanordnung nach einem der Ansprüche 11 bis 12 für das Kleben an ein Substrat mit niedriger Oberflächenenergie, ein Substrat mit mittlerer Oberflächenenergie und/oder ein Substrat mit hoher Oberflächenenergie, vorzugsweise für das Kleben an ein Substrat mit niedriger Oberflächenenergie oder ein Substrat mit mittlerer Oberflächenenergie.

## Revendications

1. Composition de mousse polymère d'adhésif sensible à la pression, comprenant :
a) un premier copolymère de (méth)acrylate comprenant de 0,1 à 12 % en poids de motifs monomères acide (méth)acrylique, sur la base du poids du premier copolymère de (méth)acrylate ; et
b) un deuxième copolymère de (méth)acrylate comprenant de 15 à 40 % en poids de motifs monomères acide (méth)acrylique, sur la base du poids du deuxième copolymère de (méth)acrylate.

2. Composition d'adhésif sensible à la pression selon la revendication 1, dans laquelle le deuxième copolymère de (méth)acrylate comprend des motifs monomères acide (méth)acrylique en une quantité supérieure à 15 % en poids, supérieure à 16 % en poids, ou même supérieure à 17 % en poids, sur la base du poids du premier copolymère de (méth)acrylate.

3. Composition d'adhésif sensible à la pression selon l'une quelconque des revendications 1 ou 2, dans laquelle :
a) le premier copolymère de (méth)acrylate comprend de 0,1 à 11 % en poids, de 0,1 à 10 % en poids, de 0,2 à 10 % en poids, de 0,2 à 9 % en poids, de 0,2 à 8 % en poids, de 0,3 à 8 % en poids, de 0,5 à 8 % en poids, de 0,5 à 6 % en poids, de 1 à 6 % en poids, ou même de 1 à 5 % en poids, de motifs monomères acide (méth)acrylique, sur la base du poids du premier copolymère de (méth)acrylate ; et
b) le deuxième copolymère de (méth)acrylate comprend de 16 à 40 % en poids, de 16 à 35 % en poids, de 16 à 30 % en poids, de 16 à 25 % en poids, de 17 à 25 % en poids, de 17 à 23 % en poids, ou même de 17 à 20 % en poids de motifs monomères acide (méth)acrylique, sur la base du poids du deuxième copolymère de (méth)acrylate.

4. Composition d'adhésif sensible à la pression selon l'une quelconque des revendications précédentes, dans laquelle :
a) le premier copolymère de (méth)acrylate a une Tg n'excédant pas 0 °C ; et
b) le deuxième copolymère de (méth)acrylate a une Tg supérieure à 0 °C, et dans laquelle la température de transition vitreuse des copolymères est mesurée par analyse thermomécanique dynamique selon la norme ASTM E1640-13.

5. Composition d'adhésif sensible à la pression selon l'une quelconque des revendications précédentes, dans laquelle :
a) le premier copolymère de (méth)acrylate a une Tg comprise entre - 70 °C et 0 °C, entre -70 °C et -10 °C, -60 °C et -10 °C, entre -60 °C et - 20 °C, entre -60 °C et -30 °C, entre -55 °C et -35 °C, ou même entre - 50 °C et -40 °C ; et
b) le deuxième copolymère de (méth)acrylate a une Tg comprise entre 2 °C et 100 °C, entre 2 °C et 80 °C, entre 2 °C et 60 °C, entre 2 °C et 50 °C, entre 2 °C et 45 °C, entre 5 °C et 45 °C, entre 5 °C et 40 °C, entre 5 °C et 35 °C, ou même entre 10 °C et 30 °C.

6. Composition d'adhésif sensible à la pression selon l'une quelconque des revendications précédentes, dans laquelle le deuxième copolymère de (méth)acrylate a une Tg, pas supérieure à 100 °C, pas supérieure à 80 °C, pas supérieure à 60 °C, pas supérieure à 50 °C, pas supérieure à 45 °C, ou même pas supérieure à 40 °C.

7. Composition d'adhésif sensible à la pression selon l'une quelconque des revendications précédentes, qui comprend :
a) de 65 à 99 % en poids, de 70 à 95 % en poids, de 75 à 95 % en poids, de 75 à 90 % en poids, ou même de 75 à 85 % en poids, du premier copolymère de (méth)acrylate ; et
b) de 1 à 35 % en poids, de 1 à 30 % en poids, de 2 à 25 % en poids, de 3 à 25 % en poids, de 3 à 20 % en poids, de 4 à 20 % en poids, ou même de 4 à 15 % en poids, du deuxième copolymère de (méth)acrylate ;
dans laquelle les pourcentages en poids sont sur la base du poids total de la composition d'adhésif sensible à la pression.

8. Composition d'adhésif sensible à la pression selon l'une quelconque des revendications précédentes, dans laquelle le premier copolymère de (méth)acrylate comprend :
a) de 0,1 à 11 % en poids, de 0,1 à 10 % en poids, de 0,2 à 10 % en poids, de 0,2 à 9 % en poids, de 0,2 à 8 % en poids, de 0,3 à 8 % en poids, de 0,5 à 8 % en poids, de 0,5 à 6 % en poids, de 1 à 6 % en poids, ou même de 1 à 5 % en poids, de motifs monomères acide (méth)acrylique, sur la base du poids du premier copolymère de (méth)acrylate ; et
b) de 89 à 99,9 % en poids, de 90 à 99,9 % en poids, de 90 à 99,8 % en poids, de 91 à 99,8 % en poids, de 92 à 99,8 % en poids, de 92 à 99,7 % en poids, de 92 à 99,5 % en poids, de 94 à 99,5 % en poids, de 94 à 99 % en poids, ou même de 95 à 99 % en poids, de motifs monomères ester d'acide (méth)acrylique en C₁ à C₃₂, de motifs monomères ester d'acide (méth)acrylique en C₁ à C₂₄, ou même de motifs monomères ester d'acide (méth)acrylique en C₁ à C₁₈, linéaires ou ramifiés, sur la base du poids du premier copolymère de (méth)acrylate.

9. Composition d'adhésif sensible à la pression selon l'une quelconque des revendications précédentes, dans laquelle le deuxième copolymère de (méth)acrylate comprend :
a) de 13 à 35 % en poids, de 13 à 30 % en poids, de 15 à 30 % en poids, de 15 à 25 % en poids, ou même de 17 à 23 % en poids, de motifs monomères acide (méth)acrylique, sur la base du poids du deuxième copolymère de (méth)acrylate ; et
b) de 65 à 87 % en poids, de 70 à 87 % en poids, de 70 à 85 % en poids, de 75 à 85 % en poids, ou même de 77 à 83 % en poids, de motifs monomères ester d'acide (méth)acrylique en C₁ à C₃₂, de motifs monomères ester d'acide (méth)acrylique en C₁ à C₂₄, ou même de motifs monomères ester d'acide (méth)acrylique en C₁ à C₁₈, linéaires ou ramifiés, sur la base du poids du deuxième copolymère de (méth)acrylate.

10. Composition d'adhésif sensible à la pression selon l'une quelconque des revendications précédentes, qui comprend :
a) de 65 à 99 % en poids, de 70 à 95 % en poids, de 75 à 95 % en poids, de 75 à 90 % en poids, ou même de 75 à 85 % en poids, du premier copolymère de (méth)acrylate ;
b) de 1 à 35 % en poids, de 1 à 30 % en poids, de 2 à 25 % en poids, de 3 à 25 % en poids, de 3 à 20 % en poids, de 4 à 20 % en poids, ou même de 4 à 15 % en poids, du deuxième copolymère de (méth)acrylate ; et
c) éventuellement, de 2 % en poids à 30 % en poids, de 2 % en poids à 20 % en poids, ou même de 2 % en poids à 15 % en poids d'un matériau de charge choisi de préférence dans le groupe de microsphères expansibles et de bulles de verre ;
dans laquelle les pourcentages en poids sont sur la base du poids total de la composition d'adhésif sensible à la pression.

11. Ensemble adhésif sensible à la pression multicouche comprenant une composition d'adhésif sensible à la pression selon l'une quelconque des revendications précédentes sous la forme d'une première couche de mousse polymère d'adhésif sensible à la pression et qui comprend en outre une deuxième couche d'adhésif sensible à la pression adjacente à la première couche polymère d'adhésif sensible à la pression.

12. Ensemble adhésif sensible à la pression multicouche selon la revendication 11, qui est obtenu par une étape de processus de revêtement humide sur humide.

13. Procédé de fabrication d'une composition d'adhésif sensible à la pression selon l'une quelconque des revendications 1 à 10, qui comprend les étapes consistant à :
a) fournir le deuxième copolymère de (méth)acrylate comprenant de 15 à 40 % en poids de motifs monomères acide (méth)acrylique, sur la base du poids du deuxième copolymère de (méth)acrylate ; et
b) incorporer le deuxième copolymère de (méth)acrylate dans une composition de précurseur durcissable comprenant les motifs monomères principaux utilisés pour préparer le premier copolymère de (méth)acrylate, les motifs monomères acide (méth)acrylique, éventuellement un initiateur de polymérisation, éventuellement un agent de réticulation, et éventuellement un matériau de charge particulaire, en formant de ce fait une composition de précurseur durcissable de la composition sensible à la pression ; et
c) durcir la composition de précurseur durcissable de la composition sensible à la pression obtenue à l'étape b), de préférence avec un rayonnement actinique.

14. Procédé selon la revendication 13, dans lequel le deuxième copolymère de (méth)acrylate est obtenu par polymérisation radicalaire, en particulier par un procédé de polymérisation sensiblement sans solvant, plus particulièrement par une réaction de polymérisation sensiblement adiabatique.

15. Utilisation d'une composition d'adhésif sensible à la pression selon l'une quelconque des revendications 1 à 10 ou d'un ensemble adhésif sensible à la pression selon l'une quelconque des revendications 11 à 12 pour la liaison à un substrat à faible énergie de surface, à un substrat à énergie de surface moyenne et/ou à un substrat à énergie de surface élevée, de préférence pour la liaison à un substrat à faible énergie de surface ou à un substrat à énergie de surface moyenne.
